# FASCICULE DE BREVET EUROPEEN

(11) **EP 2 024 659 B1**
(45) Date de publication et mention de la délivrance du brevet: **04.07.2018**
(21) Numéro de dépôt: 07788967.3
(22) Date de dépôt: 06.06.2007
(51) Int. Cl.: F16F 15/123, F16F 15/12

(54) **EMBRAYAGE A FRICTION, EN PARTICULIER POUR VEHICULE AUTOMOBILE, COMPORTANT UN PRE-AMORTISSEUR PERFECTIONNE, ET PRE-AMORTISSEUR POUR CET EMBRAYAGE**
REIBUNGSKUPPLUNG, INSBESONDERE FÜR AUTOS MIT EINEM VERBESSERTEN VORABDÄMPFER UND VORABDÄMPFER FÜR DIESE KUPPLUNG
FRICTION CLUTCH, PARTICULARLY FOR CARS, INCLUDING AN IMPROVED PRE-DAMPER, AND PRE-DAMPER FOR THIS CLUTCH

(30) Priorité: 08.06.2006 FR 0652057
(43) Date de publication de la demande: 18.02.2009
(73) Titulaire: Valeo Embrayages, 80009 Amiens Cedex 2 (FR)
(72) Inventeur: FAFET, Olivier, 80000 Amiens (FR); MINEREAU, Hugues, 93240 Stains (FR)
(74) Mandataire: Cardon, Nicolas
(86) Numéro de dépôt international: PCT/FR2007/051383
(87) Numéro de publication internationale: WO 2007/141457

(56) Documents cités:
- FR-A1- 2 496 210
- FR-A1- 2 554 894
- FR-A1- 2 557 655
- FR-A1- 2 725 256
- JP-A- 5 157 119
- US-A- 4 714 448
- US-B1- 6 446 780

## Description

L'invention concerne un embrayage à friction, en particulier pour un véhicule automobile, comportant un pré-amortisseur perfectionné, et un pré-amortisseur pour cet embrayage.

Dans un véhicule automobile, un embrayage à friction a pour fonction de transmettre un couple entre un organe rotatif d'entrée et un organe rotatif de sortie, par pincement de la friction entre un plateau de pression et un volant moteur, ainsi que d'assurer la continuité de ce couple et de filtrer les vibrations en provenance du moteur.

En général, l'organe d'entrée comporte un disque de friction et l'organe de sortie comporte un moyeu destiné notamment à être couplé à un arbre d'entrée d'une boîte de vitesses du véhicule automobile.

L'embrayage à friction comporte généralement deux amortisseurs couplés en série, appelés pré-amortisseur et amortisseur principal. Chaque amortisseur est muni d'éléments rotatifs d'entrée et de sortie susceptibles de se déplacer en rotation relative autour d'un axe géométrique commun.

Afin de permettre la transmission du couple entre les organes d'entrée et de sortie de l'embrayage, l'élément d'entrée de l'amortisseur principal est lié en rotation avec l'organe d'entrée de l'embrayage, l'élément de sortie de l'amortisseur principal est lié en rotation avec l'élément d'entrée du pré-amortisseur, et l'élément de sortie du pré-amortisseur est lié en rotation avec l'organe de sortie de l'embrayage.

Les amortisseurs de l'embrayage à friction sont destinés à filtrer les vibrations en provenance du moteur. En effet, chaque amortisseur est muni de moyens d'amortissement agencés entre ses éléments d'entrée et de sortie. Ces moyens d'amortissement comportent notamment des organes élastiques, respectivement de forte raideur dans le cas de l'amortisseur principal, et de faible raideur dans le cas du pré-amortisseur.

Lorsque les vibrations sont faibles, les organes élastiques de l'amortisseur principal ont une raideur trop forte pour permettre leur amortissement. Dans ce cas, l'amortissement des vibrations est assuré par le pré-amortisseur, dont les éléments d'entrée et de sortie se déplacent en rotation relative en mettant en oeuvre les moyens d'amortissement de ce pré-amortisseur.

Lorsque les vibrations sont plus importantes, les moyens d'amortissement du pré-amortisseur ne sont plus suffisants pour assurer l'amortissement de ces vibrations. Dans ce cas, le débattement angulaire entre les éléments d'entrée et de sortie du pré-amortisseur atteint une valeur prédéterminée, à partir de laquelle l'organe de sortie de l'amortisseur est directement couplé à l'élément de sortie de l'amortisseur principal, grâce à des moyens de couplage. Ainsi, l'amortissement des vibrations importantes est assuré par l'amortisseur principal.

Les moyens de couplage comportent habituellement au moins une butée angulaire ménagée sur l'organe de sortie de l'embrayage et une butée angulaire complémentaire ménagée sur l'élément de sortie de l'amortisseur principal. Ces butées angulaires complémentaires sont susceptibles de coopérer de façon à coupler l'élément de sortie de l'amortisseur principal et l'organe de sortie de l'embrayage lorsque leur débattement angulaire relatif atteint la valeur prédéterminée.

Lorsque les moyens de couplage s'enclenchent, les butées angulaires complémentaires, généralement métalliques, s'entrechoquent pour coopérer ensemble. Le choc entre les butées angulaires complémentaires provoque alors un bruit indésirable.

Afin de remédier à cet inconvénient, on a déjà proposé dans l'état de la technique, notamment dans FR-A-2 725 256 (FR-94 11642), un embrayage à friction, en particulier pour véhicule automobile, du type comportant deux amortisseurs couplés en série, appelés pré-amortisseur et amortisseur principal, muni chacun d'éléments rotatifs d'entrée et de sortie susceptibles de se déplacer en rotation relative autour d'un axe géométrique commun, l'élément de sortie de l'amortisseur principal étant lié en rotation avec l'élément d'entrée du pré-amortisseur de façon à former un ensemble rotatif, l'ensemble rotatif comprenant au moins une butée angulaire déformable élastiquement, susceptible de coopérer avec une butée angulaire complémentaire, agencée sur un organe de sortie de l'embrayage, lorsque le débattement angulaire entre cet organe de sortie et l'ensemble rotatif atteint une valeur prédéterminée.

La butée angulaire déformable élastiquement de l'ensemble rotatif permet d'amortir les chocs entre l'ensemble rotatif et l'organe de sortie de l'embrayage.

Toutefois, la butée angulaire déformable élastiquement, agencée sur l'ensemble rotatif conformément à l'enseignement de FR-A-2 725 256, est susceptible d'être déformée sans limite, par écrasement, ce qui accélère sont usure et réduit sa durée de vie.

Or, lorsque la butée angulaire déformable élastiquement s'use, le débattement angulaire à partir duquel les butées complémentaires coopèrent entre elles s'accroît, si bien que le pré-amortisseur est sollicité pour des vibrations supérieures à celles initialement prévues, ce qui accélère son usure et celle de l'embrayage.

L'invention a notamment pour but de réduire les bruits dus aux chocs entre les butées complémentaires, ceci sans réduire la durée de vie de l'embrayage et sans augmenter l'encombrement axial de cet embrayage.

A cet effet, l'invention a pour objet un embrayage à friction du type précité, dont l'ensemble rotatif comprend une butée angulaire rigide en retrait angulairement par rapport à la butée angulaire déformable, de façon à limiter la déformation angulaire de cette butée déformable.

Lorsque les vibrations sont importantes, la butée angulaire de l'organe de sortie de l'embrayage vient en contact avec la butée déformable, qui se déforme en absorbant le choc jusqu'à ce que la butée angulaire de l'organe de sortie de l'embrayage vienne en contact avec la butée angulaire rigide. Le choc entre la butée angulaire de l'organe de sortie et la butée angulaire rigide est ainsi amorti, et le bruit correspondant à ce choc est alors réduit.

Grâce à la butée angulaire rigide en retrait par rapport à la butée angulaire déformable, cette butée déformable ne se déforme que jusqu'à ce que la butée angulaire de l'organe de sortie entre en contact avec cette butée rigide, tout en amortissant le choc entre ces butées, et donc en réduisant les bruits gênants. Ainsi, la butée angulaire déformable ne se déforme pas de façon excessive, ce qui permet de limiter son usure.

De plus, on notera que le débattement angulaire à partir duquel l'ensemble rotatif et l'organe de sortie sont couplés ne dépend pas de la butée déformable mais uniquement de la butée rigide. Ainsi, ce débattement angulaire reste le même tout au long de la durée de vie de l'embrayage, quel que soit le niveau d'usure de la butée déformable.

Enfin, on notera que la butée déformable et la butée rigide peuvent être ménagées sur l'ensemble rotatif sans modifier l'encombrement axial de cet ensemble. En effet, ces butées sont uniquement des butées angulaires, qui ne nécessitent pas de s'étendre axialement.

L'embrayage à friction selon l'invention comporte la caractéristique suivante: la butée angulaire déformable est agencée sur l'élément d'entrée du pré- amortisseur et la butée angulaire rigide est agencée sur l'élément de sortie de l'amortisseur principal. Un embrayage à friction selon l'invention peut en outre comporter l'une ou plusieurs des caractéristiques suivantes:
- chaque butée déformable est formée par un élément mâle déformable élastiquement emboîté dans un évidement complémentaire ménagé dans l'ensemble rotatif ;
- l'évidement est délimité à la fois par des butées de positionnement radial, angulaire et axial de l'élément mâle sur l'ensemble rotatif ;
- chaque élément déformable élastiquement comporte une partie portant la butée déformable, coopérant avec les butées de positionnement radial et angulaire délimitant l'évidement correspondant, la partie étant munie d'une saillie coopérant avec la butée de positionnement axial délimitant cet évidement correspondant ;
- chaque butée déformable est formée par un élément femelle déformable élastiquement emmanché sur un élément mâle complémentaire ménagé sur l'ensemble rotatif ;
- l'élément déformable élastiquement est en caoutchouc naturel ou synthétique ;
- chaque butée angulaire déformable élastiquement est agencée sur l'ensemble rotatif de façon à coopérer avec la butée angulaire complémentaire de l'organe de sortie de l'embrayage lorsque le débattement angulaire entre cet organe de sortie et l'ensemble rotatif atteint une valeur prédéterminée dans un sens direct ;
- l'ensemble rotatif comporte au moins des première et seconde butées angulaires déformables élastiquement susceptibles de coopérer respectivement avec des première et seconde butées angulaires complémentaires de l'organe de sortie de l'embrayage,
   la première butée déformable élastiquement étant agencée sur l'ensemble rotatif de façon à coopérer avec la première butée angulaire correspondante de l'organe de sortie de l'embrayage lorsque le débattement angulaire entre cet organe de sortie et l'ensemble rotatif atteint une valeur prédéterminée dans un sens direct, et
   la seconde butée déformable élastiquement étant agencée sur l'ensemble rotatif de façon à coopérer avec la seconde butée angulaire correspondante de l'organe de sortie de l'embrayage lorsque le débattement angulaire entre cet organe de sortie et l'ensemble rotatif atteint une valeur prédéterminée dans un sens rétrograde opposé au sens direct,
   l'ensemble rotatif comportant également des première et seconde butées angulaires rigides, en retrait angulairement par rapport respectivement aux première et seconde butées angulaires déformables ;
- les capacités d'amortissement de chocs de la première butée déformable, destinée à coopérer avec la butée angulaire de l'organe de sortie de l'embrayage dans le sens direct, sont supérieures à celles de la seconde butée déformable, destinée à coopérer avec la butée angulaire de l'organe de sortie de l'embrayage dans le sens rétrograde ;
- les première et seconde butées angulaires déformables sont formées par un même élément déformable élastiquement ;
- les éléments d'entrée et de sortie de chaque amortisseur sont respectivement formés par une rondelle de guidage et par un voile de cet amortisseur ;
- l'organe de sortie de l'embrayage comporte un moyeu portant chaque butée angulaire complémentaire d'une butée angulaire correspondante déformable élastiquement, ce moyeu étant destiné à être couplé à un arbre d'entrée de boîte de vitesses du véhicule automobile.

L'invention a également pour objet un pré-amortisseur pour un embrayage à friction pour véhicule automobile, du type comportant des éléments rotatifs d'entrée et de sortie susceptibles de se déplacer en rotation relative autour d'un axe géométrique commun, dont l'élément d'entrée du pré-amortisseur comprend une butée angulaire déformable élastiquement destinée à coopérer avec une butée angulaire complémentaire, agencée sur un organe de sortie de l'embrayage, lorsque le pré-amortisseur est monté avec l'embrayage.

L'invention sera mieux comprise à la lecture de la description qui va suivre, donnée uniquement à titre d'exemple et faite en se référant aux dessins annexés dans lesquels :
- la figure 1 est une vue en perspective d'un embrayage à friction selon un premier mode de réalisation de l'invention ;
- la figure 2 est une vue en perspective d'éléments de l'embrayage à friction de la figure 1 ;
- la figure 3 est une vue de détail de la figure 1 ;
- la figure 4 est une vue en perspective d'un embrayage à friction selon un deuxième mode de réalisation de l'invention ;
- la figure 5 est une vue similaire à celle de la figure 4 d'un embrayage à friction selon un troisième mode de réalisation de l'invention.

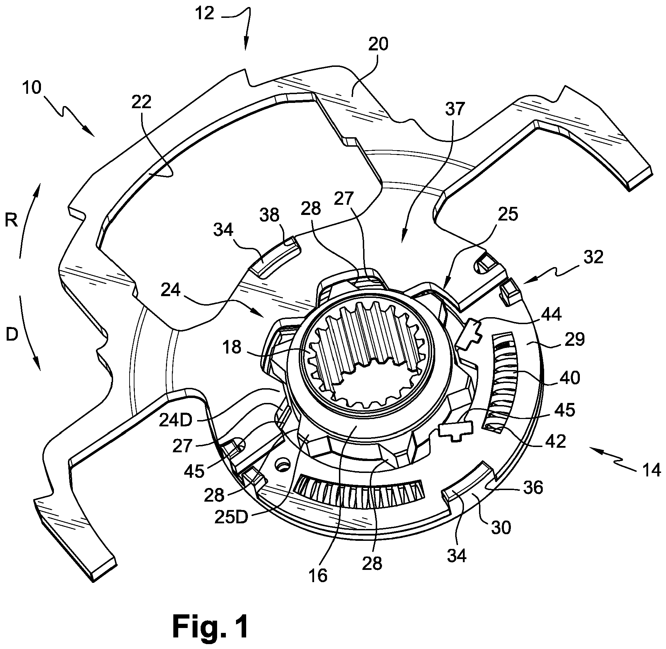

On a représenté sur la figure 1 un embrayage 10 selon un premier mode de réalisation de l'invention, destiné à équiper un véhicule automobile.

L'embrayage à friction 10 comprend un dispositif de friction muni de moyens d'amortissement comportant un amortisseur principal 12 et un pré-amortisseur 14 couplés en série. Ces amortisseurs 12, 14 sont montés entre des organes rotatifs d'entrée et de sortie de l'embrayage 10 sensiblement coaxiaux. L'organe rotatif d'entrée est habituellement un disque de friction (non représenté) et l'organe rotatif de sortie est un moyeu cylindrique 16 destiné à être couplé à un arbre mené tel que l'arbre d'entrée d'une boîte de vitesses. En effet, le moyeu 16 comporte des cannelures longitudinales internes 18 permettant de le solidariser en rotation avec une extrémité de l'arbre mené.

Chaque amortisseur 12,14 comporte un élément rotatif d'entrée et un élément rotatif de sortie susceptibles de se déplacer en rotation relative autour d'un axe géométrique commun dans un sens direct D ou dans un sens rétrograde R.

Dans ce qui suit, on appelle sens direct D le sens habituel de rotation permettant de transmettre un couple provenant du moteur vers l'arbre mené, et sens rétrograde le sens opposé au sens direct.

L'élément rotatif d'entrée de l'amortisseur principal 12 est formé par un ensemble de deux rondelles de guidage (non représentées) solidaires l'une de l'autre, liées en rotation avec l'organe rotatif d'entrée de l'amortisseur 10. L'élément rotatif de sortie de cet amortisseur principal 12 est formé par un voile annulaire 20 agencé entre les deux rondelles de guidage, co-axialement à celles-ci.

Des organes élastiques à action circonférentielle (non représentés), tels que des ressorts hélicoïdaux de forte raideur, sont logés dans des fenêtres 22 du voile 20 et des rondelles de guidage, pour la transmission d'un couple de rotation entre les rondelles de guidage et le voile annulaire 20 de l'amortisseur principal 12.

Le voile 20 comporte, en périphérie interne, une denture 24 destinée à engrener, avec un jeu circonférentiel prédéterminé, avec une denture correspondante 25 ménagée sur une périphérie externe du moyeu 16. En effet, les dents 24D de la denture 24 du voile 20 forment des butées angulaires rigides 27 destinées à coopérer avec des butées angulaires complémentaires 28 formées par les dents 25D de la denture 25 du moyeu 16 lorsque le débattement angulaire dans le sens direct D entre ce moyeu 16 et le voile 20 atteint une valeur prédéterminée, égale au jeu circonférentiel précité.

Le pré-amortisseur 14 forme une liaison entre le voile annulaire 20 de l'amortisseur principal et le moyeu 16 lorsque ceux-ci ne sont pas couplés par l'intermédiaire des dentures complémentaires 24, 25.

L'élément rotatif d'entrée du pré-amortisseur 14 est formé par des première 29 et seconde 30 rondelles de guidage solidarisées entre elles à l'aide de moyens 32 de solidarisation en rotation. Les moyens de solidarisation 32 comportent des pattes périphériques axiales 34 ménagées sur la seconde rondelle de guidage 30, coopérant avec des encoches périphériques complémentaires 36 ménagées sur la première rondelle de guidage 29. Les rondelles de guidage 29, 30 du pré-amortisseur sont également solidaires en rotation du voile 20 de l'amortisseur principal, de façon à former un ensemble rotatif 37. En effet, les pattes axiales 34 coopèrent également avec des encoches complémentaires 38 ménagées dans le contour interne des fenêtres 22 du voile 20.

Ainsi, l'élément de sortie 20 de l'amortisseur principal 12 est lié en rotation avec l'élément d'entrée 29, 30 du pré-amortisseur 14 de façon à former l'ensemble rotatif 37.

L'élément rotatif de sortie du pré-amortisseur est formé par un voile annulaire (non représenté) agencé entre les première 29 et seconde 30 rondelles de guidage. Ce voile annulaire est solidaire en rotation du moyeu 16, par exemple par engrènement sans jeu circonférentiel avec la denture périphérique externe 25 de ce moyeu 16.

Des organes élastiques 40 à action circonférentielle, tels que des ressorts hélicoïdaux de raideur relativement faible, sont logés dans des fenêtres 42 des rondelles de guidage 29, 30 et du voile du pré-amortisseur, pour la transmission d'un couple entre ces rondelles de guidage 29, 30 et le voile annulaire du pré-amortisseur.

La première rondelle de guidage 29 du pré-amortisseur comporte des éléments mâles 44 déformables élastiquement, par exemple en caoutchouc naturel ou synthétique, agencés sur la périphérie interne de cette rondelle de guidage 29. Ces éléments déformables 44 forment des butées angulaires 45 déformables élastiquement, susceptibles de coopérer avec les butées angulaires 28 du moyeu 16 lorsque le débattement angulaire entre le moyeu 16 et l'ensemble 37 atteint une valeur prédéterminée dans le sens direct D.

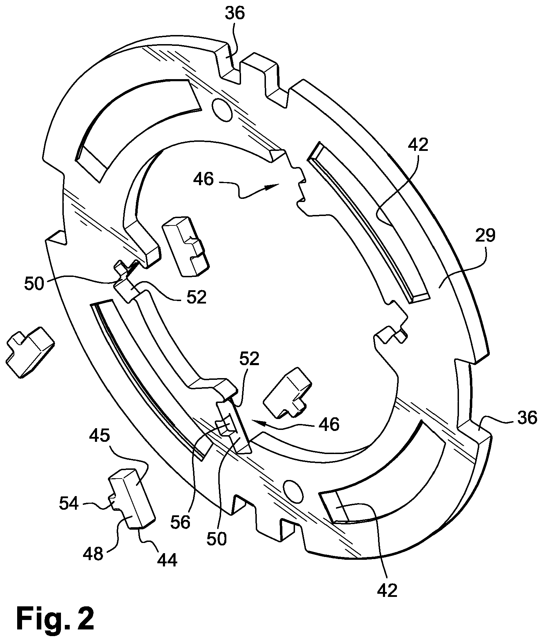

Les éléments déformables mâles 44 sont emboîtés dans des évidements 46 respectifs complémentaires, visibles sur la figure 2, ménagés dans la périphérie interne de la première rondelle de guidage 29. Chaque élément déformable 44 comporte une partie 48 portant la butée déformable 45 correspondante. Cette partie 48 est destinée à coopérer avec des butées 50, 52 de positionnement radial et angulaire de l'élément 44 sur la première rondelle de guidage 29, ces butées 50, 52 délimitant l'évidement 46 correspondant. La partie 48 comporte une saillie 54 destinée à coopérer avec une butée 56 de positionnement axial de l'élément 44 sur la première rondelle de guidage 29, cette butée 56 délimitant également l'évidement 46 correspondant. Ainsi, lorsque l'embrayage est monté, chaque élément déformable 44 est maintenu axialement entre cette butée axiale 56 et le voile 20 de l'amortisseur principal.

En variante, les éléments déformables pourraient être des éléments femelles emmanchés dans des éléments mâles complémentaires ménagés sur la périphérie interne de la première rondelle de guidage 29.

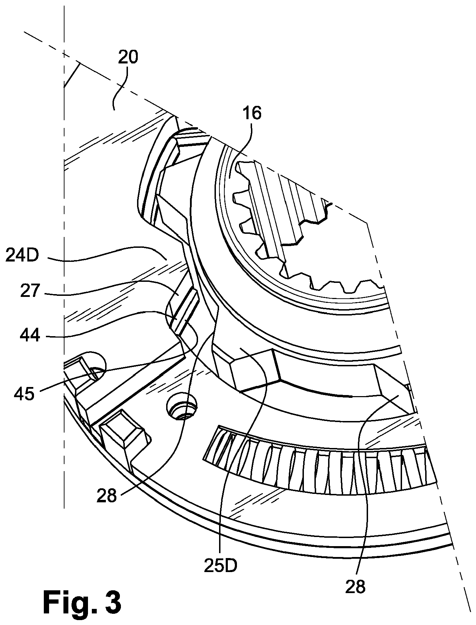

On notera que les éléments déformables 44 sont agencés sur la première rondelle de guidage 29 de façon que chaque butée angulaire rigide 27 du voile 20 soit en retrait angulairement par rapport à la butée angulaire déformable 45 destinée à coopérer avec la même butée angulaire 28, comme cela est visible sur la figure 3.

Ainsi, lorsque l'une des butées angulaires 28 du moyeu 16 vient en contact avec la butée déformable 45 correspondante, celle ci se déforme en absorbant le choc jusqu'à ce que la butée angulaire 28 du moyeu 16 vienne en contact avec la butée angulaire rigide 27 correspondante du voile 20. Le choc entre la butée angulaire 28 du moyeu 16 et la butée angulaire rigide 27 du voile 20 est ainsi amorti, et le bruit correspondant à ce choc est alors réduit.

Grâce aux butées angulaires rigides 27 disposées en retrait angulairement par rapport aux butées déformables 45, les éléments déformables 44 ne se déforment pas de façon excessive, ce qui permet de limiter leur usure.

On notera que, l'encombrement axial de la première rondelle de guidage 29 est le même que celui d'une rondelle de guidage classique, puisque les éléments déformables 44 ne dépassent pas axialement de part et d'autre des faces de la première rondelle de guidage 29. Ainsi, il est seulement nécessaire de changer cette première rondelle de guidage 29 du pré-amortisseur pour passer d'un embrayage classique à un embrayage selon l'invention, tous les autres éléments de l'embrayage étant classiques.

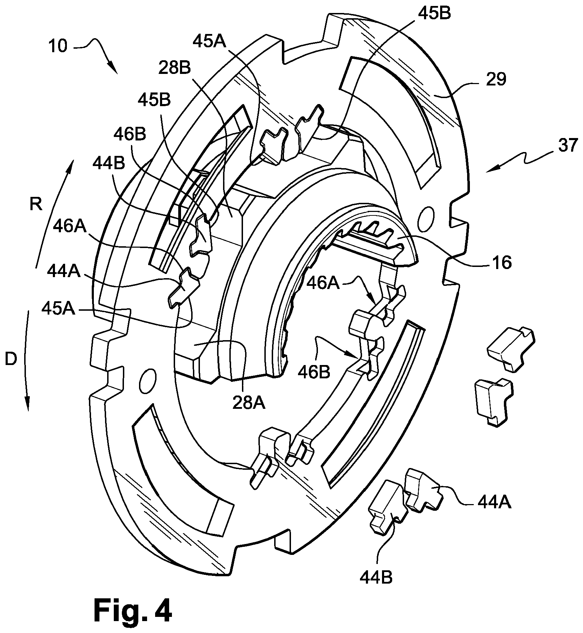

On a représenté sur la figure 4 l'embrayage 10 selon un deuxième mode de réalisation de l'invention.

Conformément à ce deuxième mode de réalisation, la première rondelle de guidage 29 (pré-amortisseur) de l'ensemble 37 comporte plusieurs paires de premier 44A et second 44B éléments déformables élastiquement agencées sur la périphérie interne de cette rondelle de guidage 29.

Chaque élément déformable élastiquement 44A, 44B est emboîté dans un évidement complémentaire 46A, 46B, analogue à l'évidement 46 représenté sur les figures précédentes. Cet évidement 46A, 46B est ménagé dans la première rondelle de guidage 29 de pré-amortisseur.

Le premier élément 44A de chaque paire forme une première butée angulaire 45A déformable élastiquement, susceptible de coopérer avec une première butée angulaire 28A complémentaire du moyeu 16 lorsque la rondelle de guidage 29 se déplace dans un sens direct D.

De même, le second élément 44B de chaque paire forme une seconde butée angulaire 45B déformable élastiquement, susceptible de coopérer avec une seconde 28B butée angulaire complémentaire du moyeu 16 lorsque la rondelle de guidage 29 se déplace dans un sens rétrograde R.

Par ailleurs, le voile de l'amortisseur principal (ce voile de l'ensemble 37 n'est pas représenté sur la figure 4) comporte plusieurs paires de première et seconde butées angulaires rigides, analogues chacune à la butée rigide 27 du voile illustré sur la figure1, en retrait angulairement respectivement par rapport aux première 45A et seconde 45B butées angulaires déformables d'une paire correspondante d'éléments déformables 44A, 44B.

De préférence, les capacités d'amortissement de chocs de chaque premier élément déformable 44A sont supérieures à celles de chaque second élément déformable 44B. En effet, les forces d'impact correspondant aux chocs entre butées sont plus importantes dans le sens direct D que dans le sens rétrograde R.

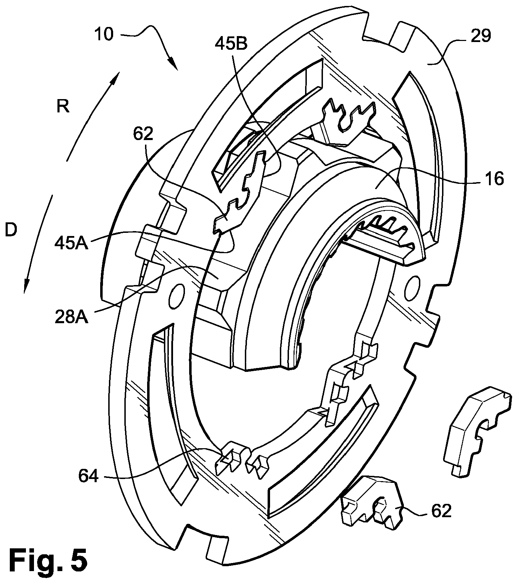

On a représenté sur la figure 5 l'embrayage 10 selon un troisième mode de réalisation de l'invention.

Conformément à ce troisième mode de réalisation, les première 45A et seconde 45B butées déformables sont portées par un même élément déformable élastiquement 62. Cet élément déformable 62 est emboîté dans un évidement complémentaire 64 ménagé en périphérie interne de la première rondelle de guidage 29.

De façon similaire au premier mode de réalisation de l'invention, l'évidement 64 est délimité à la fois par des butées de positionnement radial, angulaire et axial de l'élément 62 sur la première rondelle de guidage 29.

On notera enfin que l'invention n'est pas limitée aux modes de réalisation précédemment décrits.

En effet, il est possible d'apporter diverses variantes à l'embrayage sans pour autant sortir du cadre de l'invention.

L'étendue de la protection et l'invention sont définies par les revendications suivantes.

## Revendications

1. Embrayage à friction (10), en particulier pour véhicule automobile, du type comportant deux amortisseurs (12, 14) couplés en série, appelés pré-amortisseur (14) et amortisseur principal (12), muni chacun d'éléments rotatifs d'entrée et de sortie susceptibles de se déplacer en rotation relative autour d'un axe géométrique commun, l'élément de sortie (20) de l'amortisseur principal (12) étant lié en rotation avec l'élément d'entrée (29, 30) du pré-amortisseur (14) de façon à former un ensemble rotatif (37), l'ensemble rotatif (37) comprenant au moins une butée angulaire (45 ; 45A, 45B) déformable élastiquement, susceptible de coopérer avec une butée angulaire complémentaire (28 ; 28A, 28B), agencée sur un organe de sortie (16) de l'embrayage (10), lorsque le débattement angulaire entre cet organe de sortie (16) et l'ensemble rotatif (37) atteint une valeur prédéterminée, **caractérisé en ce que** l'ensemble rotatif (37) comprend une butée angulaire rigide (27) en retrait angulairement par rapport à la butée angulaire déformable (45 ; 45A, 45B), de façon à limiter la déformation angulaire de cette butée déformable (45 ; 45A, 45B), la butée angulaire déformable (45 ; 45A, 45B) étant agencée sur l'élément d'entrée (29, 30) du pré-amortisseur (14) et la butée angulaire rigide (27) étant agencée sur l'élément de sortie (20) de l'amortisseur principal (12).

2. Embrayage à friction (10) selon la revendication 1, **caractérisé en ce que** chaque butée déformable (45 ; 45A, 45B) est formée par un élément mâle déformable élastiquement (44 ; 44A, 44B ; 62) emboîté dans un évidement complémentaire (46 ; 46A, 46B ; 64) ménagé dans l'ensemble rotatif (37).

3. Embrayage à friction (10) selon la revendication 2, **caractérisé en ce que** l'évidement (46 ; 46A, 46B ; 64) est délimité à la fois par des butées (50, 52, 56) de positionnement radial, angulaire et axial de l'élément mâle (44 ; 44A, 44B ; 62) sur l'ensemble rotatif (37).

4. Embrayage à friction (10) selon la revendication 3, **caractérisé en ce que** chaque élément (44) déformable élastiquement comporte une partie (48) portant la butée déformable (45), coopérant avec les butées (50, 52) de positionnement radial et angulaire délimitant l'évidement (46) correspondant, la partie (48) étant munie d'une saillie (54) coopérant avec la butée (56) de positionnement axial délimitant cet évidement (46) correspondant.

5. Embrayage à friction (10) selon la revendication 1, **caractérisé en ce que** chaque butée déformable (45) est formée par un élément femelle déformable élastiquement emmanché sur un élément mâle complémentaire ménagé sur l'ensemble rotatif (37).

6. Embrayage à friction (10) selon l'une quelconque des revendications 2 à 5, **caractérisé en ce que** l'élément (44 ; 44A, 44B ; 62) déformable élastiquement est en caoutchouc naturel ou synthétique.

7. Embrayage à friction (10) selon l'une quelconque des revendications 1 à 6, **caractérisé en ce que** chaque butée angulaire déformable élastiquement (45 ; 45A) est agencée sur l'ensemble rotatif (37) de façon à coopérer avec la butée angulaire complémentaire (28 ; 28A) de l'organe de sortie (16) de l'embrayage (10) lorsque le débattement angulaire entre cet organe de sortie (16) et l'ensemble rotatif (37) atteint une valeur prédéterminée dans un sens direct (D).

8. Embrayage à friction (10) selon l'une quelconque des revendications 1 à 6, **caractérisé en ce que** l'ensemble rotatif (37) comporte au moins des première (45A) et seconde (45B) butées angulaires déformables élastiquement susceptibles de coopérer respectivement avec des première (28A) et seconde (28B) butées angulaires complémentaires de l'organe de sortie (16) de l'embrayage (10),
la première butée déformable élastiquement (45A) étant agencée sur l'ensemble rotatif (37) de façon à coopérer avec la première butée angulaire (28A) correspondante de l'organe de sortie (16) de l'embrayage (10) lorsque le débattement angulaire entre cet organe de sortie (16) et l'ensemble rotatif (37) atteint une valeur prédéterminée dans un sens direct (D), et
la seconde butée déformable élastiquement (45B) étant agencée sur l'ensemble rotatif (37) de façon à coopérer avec la seconde butée angulaire (28A) correspondante de l'organe de sortie (16) de l'embrayage (10) lorsque le débattement angulaire entre cet organe de sortie (16) et l'ensemble rotatif (37) atteint une valeur prédéterminée dans un sens rétrograde (R) opposé au sens direct (D),
l'ensemble rotatif (37) comportant également des première et seconde butées angulaires rigides, en retrait angulairement par rapport respectivement aux première (45A) et seconde (45B) butées angulaires déformables.

9. Embrayage à friction (10) selon la revendication 8, **caractérisé en ce que** les capacités d'amortissement de chocs de la première butée déformable (45A), destinée à coopérer avec la butée angulaire (28A) de l'organe de sortie (16) de l'embrayage (10) dans le sens direct (D), sont supérieures à celles de la seconde butée déformable (45B), destinée à coopérer avec la butée angulaire (28B) de l'organe de sortie (16) de l'embrayage (10) dans le sens rétrograde (R).

10. Embrayage à friction (10) selon la revendication 8, **caractérisé en ce que** les première (45A) et seconde (45B) butées angulaires déformables sont formées par un même élément déformable élastiquement (62).

11. Embrayage à friction (10) selon l'une quelconque des revendications précédentes, **caractérisé en ce que** les éléments d'entrée et de sortie de chaque amortisseur (12, 14) sont respectivement formés par une rondelle de guidage (29, 30) et par un voile (20) de cet amortisseur.

12. Embrayage à friction (10) selon l'une quelconque des revendications précédentes, **caractérisé en ce que** l'organe de sortie (16) de l'embrayage (10) comporte un moyeu (16) portant chaque butée angulaire (28 ; 28A, 28B) complémentaire d'une butée angulaire correspondante (45 ; 45A, 45B) déformable élastiquement, ce moyeu (16) étant destiné à être couplé à un arbre d'entrée de boîte de vitesses du véhicule automobile.

## Patentansprüche

1. Reibungskupplung (10), insbesondere für ein Kraftfahrzeug, umfassend zwei Dämpfer (12, 14), die in Serie geschaltet sind, Vorabdämpfer (14) und Hauptdämpfer (12) genannt, die jeweils mit drehenden Eingangs- und Ausgangselementen versehen sind, die geeignet sind, sich in relativer Drehung um eine gemeinsame geometrische Achse zu drehen, wobei das Ausgangselement (20) des Hauptdämpfers (12) drehfest mit dem Eingangselement (29, 30) des Vorabdämpfers (14) verbunden ist, um eine drehende Einheit (37) zu bilden, wobei die drehende Einheit (37) mindestens einen elastisch verformbaren Winkelanschlag (45; 45A, 45B) umfasst, der geeignet ist, mit einem komplementären Winkelanschlag (28; 28A, 28B) zusammenzuwirken, der auf einem Ausgangselement (16) der Kupplung (10) angeordnet ist, wenn der Winkelausschlag zwischen diesem Ausgangselement (16) und der drehenden Einheit (37) einen vorbestimmten Wert erreicht, **dadurch gekennzeichnet, dass** die drehende Einheit (37) einen starren Winkelanschlag (27) umfasst, der in Bezug zum verformbaren Winkelanschlag (45; 45A, 45B) winkelig zurückgesetzt ist, um die Winkelverformung dieses verformbaren Anschlags (45; 45A, 45B) zu begrenzen, wobei der verformbare Winkelanschlag (45; 45A, 45B) auf dem Eingangselement (29, 30) des Vorabdämpfers (14) angeordnet ist, und der starre Winkelanschlag (27) auf dem Ausgangselement (20) des Hauptdämpfers (12) angeordnet ist.

2. Reibungskupplung (10) nach Anspruch 1, **dadurch gekennzeichnet, dass** jeder verformbare Anschlag (45; 45A, 45B) von einem elastisch verformbaren Einsteckelement (44; 44A, 44B; 62) gebildet ist, das in eine komplementäre Aussparung (46; 46A, 46B; 64), die in der drehenden Einheit (37) vorgesehen ist, eingesteckt wird.

3. Reibungskupplung (10) nach Anspruch 2, **dadurch gekennzeichnet, dass** die Aussparung (46; 46A, 46B; 64) von Anschlägen (50, 52, 56) zur radialen, winkeligen als auch axialen Positionierung des Einsteckelements (44; 44A, 44B; 62) auf der drehenden Einheit (37) begrenzt ist.

4. Reibungskupplung (10) nach Anspruch 3, **dadurch gekennzeichnet, dass** jedes elastisch verformbare Element (44) einen Teil (48) umfasst, der den verformbaren Anschlag (45) trägt, der mit den Anschlägen (50, 52) zur radialen und winkeligen Positionierung, die die entsprechende Aussparung (46) begrenzen, zusammenwirkt, wobei der Teil (48) mit einen Vorsprung (54) versehen ist, der mit dem Anschlag (56) zur axialen Positionierung, der diese entsprechende Aussparung (46) begrenzt, zusammenwirkt.

5. Reibungskupplung (10) nach Anspruch 1, **dadurch gekennzeichnet, dass** jeder verformbare Anschlag (45) von einem elastisch verformbaren Aufnahmeelement gebildet ist, das auf ein komplementäres Einsteckelement, das auf der drehenden Einheit (37) vorgesehen ist, aufgesetzt wird.

6. Reibungskupplung (10) nach einem der Ansprüche 2 bis 5, **dadurch gekennzeichnet, dass** das elastisch verformbare Element (44; 44A, 44B; 62) aus natürlichem oder synthetischem Kautschuk ist.

7. Reibungskupplung (10) nach einem der Ansprüche 1 bis 6, **dadurch gekennzeichnet, dass** jeder elastisch verformbare Winkelanschlag (45; 45A) auf der drehenden Einheit (37) derart angeordnet ist, dass er mit dem komplementären Winkelanschlag (28; 28A) des Ausgangselements (16) der Kupplung (10) zusammenwirkt, wenn der Winkelausschlag zwischen diesem Ausgangselement (16) und der drehenden Einheit (37) einen vorbestimmten Wert in einer Vorwärtsrichtung (D) erreicht.

8. Reibungskupplung (10) nach einem der Ansprüche 1 bis 6, **dadurch gekennzeichnet, dass** die drehende Einheit (37) mindestens erste (45A) und zweite (45B) elastisch verformbare Winkelanschläge umfasst, die geeignet sind, mit ersten (28A) bzw. zweiten (28B) komplementären Winkelanschlägen des Ausgangselements (16) der Kupplung (10) zusammenzuwirken.
wobei der erste elastisch verformbare Winkelanschlag (45A) auf der drehenden Einheit (37) angeordnet ist, um mit dem entsprechenden ersten Winkelanschlag (28A) des Ausgangselements (16) der Kupplung (10) zusammenzuwirken, wenn der Winkelausschlag zwischen diesem Ausgangselement (16) und der drehenden Einheit (37) einen vorbestimmten Wert in eine Vorwärtsrichtung (D) erreicht, und
wobei der zweite elastisch verformbare Anschlag (45B) auf der drehenden Einheit (37) angeordnet ist, um mit dem entsprechenden zweiten Winkelanschlag (28A) des Ausgangselements (16) der Kupplung (10) zusammenzuwirken, wenn der Winkelausschlag zwischen diesem Ausgangselement (16) und der drehenden Einheit (37) einen vorbestimmten Wert in eine zur Vorwärtsrichtung (D) entgegengesetzte Rückwärtsrichtung (R) erreicht,
wobei die drehende Einheit (37) auch erste und zweite starre Winkelanschläge umfasst, die winkelig in Bezug zum ersten (45A) bzw. zweiten (45B) verformbaren Winkelanschlag zurückgesetzt sind.

9. Reibungskupplung (10) nach Anspruch 8, **dadurch gekennzeichnet, dass** die Stoßdämpfungsfähigkeiten des ersten verformbaren Anschlags (45A), der dazu bestimmt ist, mit dem Winkelanschlag (28A) des Ausgangselements (16) der Kupplung (10) in Vorwärtsrichtung (D) zusammenzuwirken, größer sind als jene des zweiten verformbaren Anschlags (45B), der dazu bestimmt ist, mit dem Winkelanschlag (28B) des Ausgangselements (16) der Kupplung (10) in Rückwärtsrichtung (R) zusammenzuwirken.

10. Reibungskupplung (10) nach Anspruch 8, **dadurch gekennzeichnet, dass** die ersten (45A) und zweiten (45B) verformbaren Winkelanschläge von einem selben elastisch verformbaren Element (62) gebildet sind.

11. Reibungskupplung (10) nach einem der vorhergehenden Ansprüche, **dadurch gekennzeichnet, dass** die Eingangs- und Ausgangselemente jedes Dämpfers (12, 14) von einer Führungsscheibe (29, 30) bzw. einer Flanschscheibe (20) dieses Dämpfers gebildet sind.

12. Reibungskupplung (10) nach einem der vorhergehenden Ansprüche, **dadurch gekennzeichnet, dass** das Ausgangselement (16) der Kupplung (10) eine Nabe (16) umfasst, die jeden komplementären Winkelanschlag (28; 28A, 28B) eines entsprechenden elastisch verformbaren Winkelanschlags (45; 45A, 45B) trägt, wobei diese Nabe (16) dazu bestimmt ist, mit einer Getriebeeingangswelle des Kraftfahrzeugs verbunden zu sein.

## Claims

1. Friction clutch (10), particularly for a motor vehicle, of the type comprising two dampers (12, 14) coupled in series, referred to as pre-damper (14) and main damper (12), each provided with rotary input and output elements capable of moving rotationally relative to one another about a common geometric axis, the output element (20) of the main damper (12) being rotationally connected to the input element (29, 30) of the pre-damper (14) so as to form a rotary assembly (37), the rotary assembly (37) comprising at least one elastically deformable angular end stop (45; 45A, 45B) capable of collaborating with a complementary angular end stop (28; 28A, 28B) arranged on an output member (16) of the clutch (10) when the angular travel between this output member (16) and the rotary assembly (37) reaches a predetermined value, **characterized in that** the rotary assembly (37) comprises a rigid angular end stop (27) set back angularly with respect to the deformable angular end stop (45; 45A, 45B) so as to limit the angular deformation of this deformable end stop (45; 45A, 45B), the deformable angular end stop (45; 45A; 45B) being arranged on the input element (29, 30) of the pre-damper (14) and the rigid angular end stop (27) being arranged on the output element (20) of the main damper (12).

2. Friction clutch (10) according to Claim 1, **characterized in that** each deformable end stop (45; 45A, 45B) is formed by an elastically deformable male element (44; 44A, 44B; 62) fitted into a complementary recess (46; 46A, 46B; 64) formed in the rotary assembly (37).

3. Friction clutch (10) according to Claim 2, **characterized in that** the recess (46; 46A, 46B; 64) is delimited at once by end stops (50, 52, 56) governing the radial, angular and axial positioning of the male element (44; 44A, 44B; 62) on the rotary assembly (37).

4. Friction clutch (10) according to Claim 3, **characterized in that** each elastically deformable element (44) comprises a part (48) bearing the deformable end stop (45), collaborating with the end stops (50, 52) governing the radial and angular positioning delimiting the corresponding recess (46), the part (48) being equipped with a projection (54) collaborating with the end stop (56) that governs the axial positioning delimiting this corresponding recess (46).

5. Friction clutch (10) according to Claim 1, **characterized in that** each deformable end stop (45) is formed by an elastically deformable female element fitted over a complementary male element formed on the rotary assembly (37).

6. Friction clutch (10) according to any one of Claims 2 to 5, **characterized in that** the elastically deformable element (44; 44A, 44B; 62) is made of natural or synthetic rubber.

7. Friction clutch (10) according to any one of Claims 1 to 6, **characterized in that** each elastically deformable angular end stop (45; 45A) is arranged on the rotary assembly (37) in such a way as to collaborate with the complementary angular end stop (28; 28A) of the output member (16) of the clutch (10) when the angular travel between this output member (16) and the rotary assembly (37) reaches a predetermined value in a direct direction (D).

8. Friction clutch (10) according to any one of Claims 1 to 6, **characterized in that** the rotary assembly (37) comprises at least first (45A) and second (45B) elastically deformable angular end stops capable of collaborating respectively with complementary first (28A) and second (28B) angular end stops of the output member (16) of the clutch (10),
the first elastically deformable end stop (45A) being arranged on the rotary assembly (37) in such a way as to collaborate with the corresponding first angular end stop (28A) of the output member (16) of the clutch (10) when the angular travel between this output member (16) and the rotary assembly (37) reaches a predetermined value in a direct direction (D), and
the second elastically deformable end stop (45B) being arranged on the rotary assembly (37) in such a way as to collaborate with the corresponding second angular end stop (28A) of the output member (16) of the clutch (10) when the angular travel between this output member (16) and the rotary assembly (37) reaches a predetermined value in a retrograde direction (R) which is the opposite of the direct direction (D),
the rotary assembly (37) also comprising first and second rigid angular end stops, angularly set back with respect to the first (45A) and second (45B) deformable angular end stops respectively.

9. Friction clutch (10) according to Claim 8, **characterized in that** the shock-absorbing capacities of the first deformable end stop (45A) intended to collaborate with the angular end stop (28A) of the output member (16) of the clutch (10) in the direct direction (D) are higher than those of the second deformable end stop (45B) intended to collaborate with the angular end stop (28B) of the output member (16) of the clutch (10) in the retrograde direction (R).

10. Friction clutch (10) according to Claim 8, **characterized in that** the first (45A) and second (45B) deformable angular end stops are formed by the one same elastically deformable element (62).

11. Friction clutch (10) according to any one of the preceding claims, **characterized in that** the input and output elements of each damper (12, 14) are respectively formed by a guide washer (29, 30) and by a web (20) of this damper.

12. Friction clutch (10) according to any one of the preceding claims, **characterized in that** the output member (16) of the clutch (10) comprises a hub (16) bearing each angular end stop (28; 28A, 28B) complementing an elastically deformable corresponding angular end stop (45; 45A, 45B), this hub (16) being intended to be coupled to a motor vehicle gearbox input shaft.
